# EUROPEAN PATENT APPLICATION

(11) **EP 4 730 833 A1**
(43) Date of publication of application: **22.04.2026**
(21) Application number: 24822301.8
(22) Date of filing: 12.03.2024
(51) Int. Cl.: H04N 23/74, H04N 23/63

(54) **PHOTOGRAPHING LIGHT-FILLING METHOD AND APPARATUS, AND ELECTRONIC DEVICE AND COMPUTER-READABLE STORAGE MEDIUM**

(30) Priority: 16.06.2023 CN 202310713013
(71) Applicant: TCL Communication Technology (Chengdu) Limited, Chengdu, Sichuan 610000 (CN)
(72) Inventor: WANG, Ancheng, Chengdu, Sichuan 610000 (CN); ZHANG, Hong, Chengdu, Sichuan 610000 (CN)
(74) Representative: Murgitroyd & Company
(86) International application number: PCT/CN2024/081090
(87) International publication number: WO 2024/255343

(57) **Abstract**

Disclosed in the embodiments of the present application are a photographing light-filling method and apparatus, and an electronic device and a computer-readable storage medium. In the method, a screen is divided into a plurality of sub-regions, and a different light emission brightness is provided for each sub-region, thereby improving the accuracy of brightness provision, realizing differentiated brightness compensation for each sub-region, and improving the overall visual effect and quality of imaging.

## Description

### ELECTRONIC DEVICE AND COMPUTER-READABLE STORAGE MEDIUM

This application claims priority to Chinese Application No. 202310713013.2 on June 16, 2023, entitled "PHOTOGRAPHING LIGHT-FILLING METHOD AND APPARATUS, AND ELECTRONIC DEVICE AND COMPUTER-READABLE STORAGE MEDIUM", the contents of which are incorporated herein by reference in their entirety.

### FIELD OF THE INVENTION

The embodiments of the present disclosure. relate to the field of computer technologies, and particularly relate to a photographing light-filling method, a photographing light-filling apparatus, an electronic device, and a computer-readable storage medium.

### BACKGROUND

With continuous iterations and upgrades of terminal devices, shooting systems in terminal devices have also been constantly improved, and capturing increasingly clearer images has become an important development direction.

### Technical Problem

However, the quality of image shooting is not only affected by the performance of the shooting system, but also by shooting environments, such as ambient brightness. Due to the uncertainty and variability of natural environments, it is difficult to ensure that each shooting scenario has a satisfactory brightness condition.

Therefore, overcoming the brightness limitations of the shooting environment has become a key direction for upgrading shooting systems. In particular, for shooting using a front camera, when the device does not include a front flash, how to obtain an image with good visual quality is an urgent problem to be solved.

Although existing solutions attempt to address brightness issues for front-camera shooting by providing a front flash or by increasing the brightness of a screen, because such lighting approaches are single and limited, the resulting imaging quality often fails to meet expectations, and the user experience remains unsatisfactory.

### Technical Solution

The embodiments of the present disclosure. provide a photographing light-filling method, a photographing light-filling apparatus, an electronic device, and a computer-readable storage medium, which can improve the imaging quality of shooting performed by a front camera and enhance the user experience.

The embodiments of the present disclosure. provide a photographing light-filling method, which is applied to a terminal device. The method includes:
displaying a real-time preview image on a screen of the terminal device, where the real-time preview image is obtained by shooting through a front camera of the terminal device;
dividing the real-time preview image and the screen respectively into at least two sub-regions to obtain image sub-regions and screen sub-regions in one-to-one correspondence;
determining to-be-filled light brightness information for each image sub-region according to real-time brightness information of the image sub-region; and
adjusting light-emitting brightness information of each screen sub-region according to the to-be-filled light brightness information of the corresponding image sub-region.

Correspondingly, the embodiments of the present disclosure. further provide a photographing light-filling apparatus applied to the terminal device. The apparatus includes:
a display module configured to display the real-time preview image on the screen of the terminal device, where the real-time preview image is obtained by shooting through the front camera of the terminal device;
a division module configured to divide the real-time preview image and the screen respectively into at least two sub-regions to obtain the image sub-regions and the screen sub-regions in one-to-one correspondence;
a fill-light brightness determination module configured to determine the to-be-filled light brightness information for each image sub-region according to the real-time brightness information of the image sub-region; and
a fill-light module configured to adjust the light-emitting brightness information of each screen sub-region according to the to-be-filled light brightness information of the corresponding image sub-region.

Optionally, in some embodiments of the present disclosure, the fill-light brightness determination module includes:
a first distance determination unit configured to determine a spatial distance between a real-scene portion corresponding to each image sub-region and the corresponding screen sub-region according to a depth map corresponding to the real-time preview image; and
a fill-light brightness determination unit configured to determine the to-be-filled light brightness information according to the spatial distance and the real-time brightness information.

In some embodiments of the present disclosure, the fill-light module includes:
a first angle determination unit configured to determine relative angle information between a target object main body in the real-time preview image and the screen according to the depth map corresponding to the real-time preview image and posture information of the terminal device;
a second distance determination unit configured to determine the spatial distance between each screen sub-region and the corresponding image sub-region according to the depth map;
a fill-light brightness determination unit configured to determine to-be-emitted light brightness information of each screen sub-region according to the to-be-filled light brightness information of the corresponding image sub-region, the spatial distance, and the relative angle information;
a fill-light unit configured to adjust the light-emitting brightness information of the screen sub-region to the to-be-emitted light brightness information.

In some embodiments of the present disclosure, the first angle determination unit includes:
a main-body plane determination sub-unit configured to determine main-body plane information of the target object main body in the real-time preview image according to the depth map corresponding to the real-time preview image;
a screen plane determination sub-unit configured to determine screen plane information of the screen according to the posture information of the terminal device;
a first angle determination sub-unit configured to determine rotation angle information, pitch angle information, and roll angle information between the target object main body and the screen according to the main-body plane information and the screen plane information;
a second angle determination sub-unit configured to obtain the relative angle information according to the rotation angle information, the pitch angle information, and the roll angle information.

In some embodiments of the present disclosure, the apparatus further includes a real-time brightness determination module. The real-time brightness determination module includes:
a real-time brightness determination unit configured to determine the real-time brightness information of each image sub-region according to image raw data corresponding to the image sub-region, where the image raw data is obtained after an image sensor converts captured light-source information into data signals.

In some embodiments of the present disclosure, the division module includes:
a first division unit configured to divide the screen into at least two screen sub-regions according to a distribution condition of backlight regions corresponding to the screen; and
a second division unit configured to divide the real-time preview image according to a distribution condition of the screen sub-regions to obtain the image sub-regions that correspond one-to-one to the screen sub-regions.

In some embodiments of the present disclosure, the real-time preview image includes a face image, where the face image is a part of the real-time preview image. The division module includes:
a third division unit configured to divide the face image and the screen to obtain at least two image sub-regions and at least two screen sub-regions;
a second angle determination unit configured to determine relative angle information between a face surface corresponding to the face image and the screen according to the depth map of the real-time preview image and the posture information of the terminal device;
a position determination unit configured to determine relative position information between the face surface corresponding to the face image and the screen according to the depth map and the relative angle information; and
a correspondence relationship determination unit configured to establish a one-to-one correspondence between the image sub-regions and the screen sub-regions according to the relative angle information and the relative position information.

In a third aspect, the embodiments of the present disclosure. further provide an electronic device. The electronic device includes a memory, a processor, and a computer program stored in the memory and executable on the processor. When the computer program is executed by the processor, the steps of the above-described photographing light-filling method are implemented.

In a fourth aspect, the embodiments of the present disclosure. further provide a computer-readable storage medium. A computer program is stored on the computer-readable storage medium, and when the computer program is executed by the processor, the steps of the above-described photographing light-filling method are implemented.

In a fifth aspect, the embodiments of the present disclosure. further provide a computer program product or a computer program. The computer program product or computer program includes computer instructions stored in a computer-readable storage medium. A processor of a computer device reads the computer instructions from the computer-readable storage medium and executes the computer instructions so that the computer device performs the methods provided in various optional implementations of the embodiments of the present disclosure.

### Advantageous Effects

The embodiments of the present disclosure. are applied to a terminal device. The terminal device displays a real-time preview image on a screen, where the real-time preview image is obtained by shooting through a front camera of the terminal device. The real-time preview image and the screen are divided respectively into at least two sub-regions to obtain image sub-regions and screen sub-regions in one-to-one correspondence. For each image sub-region, to-be-filled light brightness information is determined according to real-time brightness information of the image sub-region. For each screen sub-region, light-emitting brightness information of the screen sub-region is adjusted according to the to-be-filled light brightness information of the corresponding image sub-region.

Through this configuration, the screen of the terminal device provides brightness for front-camera shooting, thereby improving the imaging quality of the front camera. By dividing the screen into multiple sub-regions and providing different light-emitting brightness for each sub-region, the accuracy of brightness provision is improved, enabling differentiated brightness compensation for the respective sub-regions and enhancing overall visual effects and imaging quality. Each screen sub-region performs light compensation according to its corresponding image sub-region, and the to-be-filled light brightness information is determined based on the real-time brightness information of the corresponding image sub-region, which improves the accuracy of the fill-light brightness for each screen sub-region.

### BRIEF DESCRIPTION OF THE DRAWINGS

In order to more clearly illustrate the technical solutions in the embodiments of the present disclosure, the drawings to be used in the description of the embodiments are briefly introduced below. It is obvious that the drawings in the following description merely show some embodiments of the present disclosure. For those skilled in the art, other drawings can also be obtained based on these drawings without any inventive effort.
FIG. 1 illustrates a scenario of the photographing light-filling method according to an embodiment of the present disclosure.
FIG. 2 illustrates a flowchart of the photographing light-filling method according to another embodiment of the present disclosure.
FIG. 3 illustrates a result of dividing a screen and a real-time preview image, according to another embodiment of the present disclosure.
FIG. 4 illustrates a result of dividing a screen and a face image, according to another embodiment of the present disclosure.
FIG. 5 illustrates a flowchart of a brightness compensation method when a front camera shoots a face, according to another embodiment of the present disclosure.
FIG. 6 illustrates a relative position between a screen and a face surface, according to another embodiment of the present disclosure.
FIG. 7 illustrates an effect of performing brightness compensation on a face surface based on screen brightness, according to another embodiment of the present disclosure.
FIG. 8 illustrates a block diagram of a photographing light-filling apparatus according to another embodiment of the present disclosure.
FIG. 9 is a block diagram of an electronic device according to another embodiment of the present disclosure.

### DETAILED DESCRIPTION OF THE PRESENT DISCLOSURE

The technical solutions of the present disclosure. will be clearly and comprehensively described below with reference to the drawings. It is apparent that the embodiments described herein are only a portion of the embodiments of the present invention and not all embodiments. Based on the embodiments of the present invention, all other embodiments that can be obtained by those skilled in the art without inventive effort shall fall within the protection scope of the present invention.

The embodiments of the present disclosure. provide a photographing light-filling method, a photographing light-filling apparatus, an electronic device, and a computer-readable storage medium. Specifically, the embodiments of the present disclosure. provide a photographing light-filling apparatus applicable to an electronic device. The electronic device includes a terminal device, which may include but is not limited to a mobile phone, a laptop computer, a tablet computer, or any other device having a front camera shooting function.

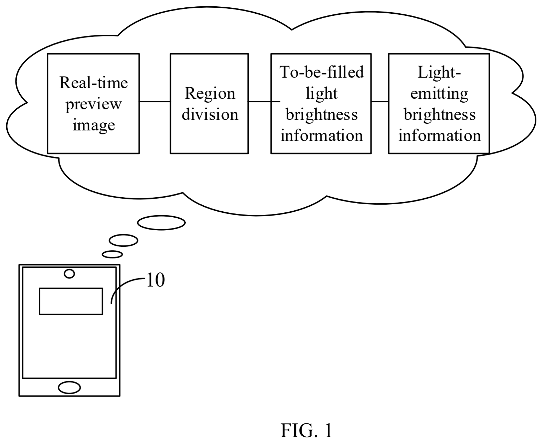

Please refer to FIG. 1. FIG. 1 illustrates a scenario in which the terminal device executes the photographing light-filling method according to another embodiment of the present disclosure. The specific execution process of the photographing light-filling method by the terminal device is as follows:

A terminal device 10 activates a front camera to perform shooting to obtain a real-time preview image, and displays the real-time preview image on a screen of the terminal device 10. Subsequently, the terminal device divides the real-time preview image and a region corresponding to the screen respectively to obtain multiple image sub-regions corresponding to the real-time preview image and multiple screen sub-regions corresponding to the screen, where the image sub-regions correspond one-to-one to the screen sub-regions.

Then, the terminal device 10 determines to-be-filled light brightness information for each image sub-region according to real-time brightness information of the image sub-region. For each screen sub-region, the terminal device 10 adjusts light-emitting brightness information of the screen sub-region according to the to-be-filled light brightness information of the corresponding image sub-region.

In the embodiments of the present disclosure, the division size of the image sub-regions and the screen sub-regions may be predefined according to actual requirements. It can be understood that as the division size decreases, the number of screen sub-regions and image sub-regions increases. Correspondingly, screen brightness control becomes more refined, and the fill-light effect and imaging effect are improved, but certain computational resource overhead may also be introduced.

It can be understood that, by using the screen of the terminal device to provide brightness for front-camera shooting, the imaging quality of the front camera is improved. By dividing the screen into multiple sub-regions and providing different light-emitting brightness for each sub-region, the accuracy of brightness provision is enhanced, enabling differentiated brightness compensation for the respective sub-regions and improving the overall visual effect and imaging quality. Each screen sub-region performs light compensation according to its corresponding image sub-region, and the to-be-filled light brightness information is determined based on the real-time brightness information of the corresponding image sub-region, which improves the accuracy of the fill-light brightness of each screen sub-region.

Detailed descriptions are provided below. It should be noted that the order of the following embodiments is not intended to indicate any priority of the embodiments.

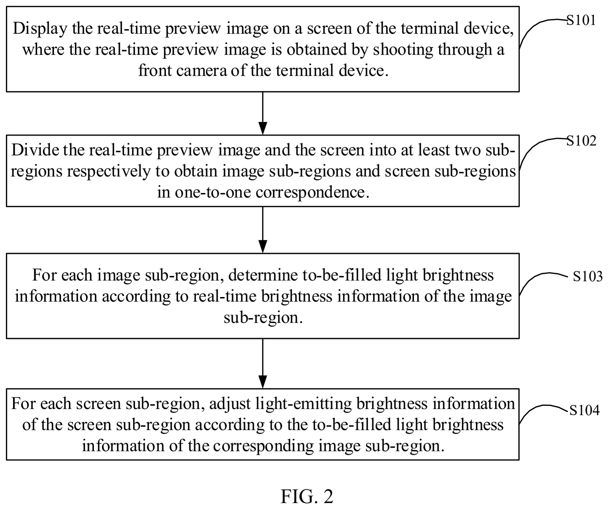

Please refer to FIG. 2. FIG. 2 is a flowchart of the photographing light-filling method according to another embodiment of the present disclosure. The photographing light-filling method includes operations S101-S104.

S101: displaying a real-time preview image on a screen of the terminal device, where the real-time preview image is obtained by shooting through a front camera of the terminal device.

It can be understood that, in the embodiments of the present disclosure, the real-time preview image refers to a preview image captured after a camera is activated. The content of the preview image changes with the shooting angle, rather than being a fixed image after shooting confirmation.

In the embodiments of the present disclosure, the real-time preview image may be obtained through either a front camera or a rear camera. Specifically, when the terminal device uses a single screen located on the front of the terminal device, the real-time preview image is obtained through the front camera. When the terminal device includes dual screens, for example, one screen on the front side and one screen on the back side, then when the screen displaying the real-time preview image is the screen on the back side of the terminal device, the real-time preview image is captured through the rear camera.

That is, in the embodiments of the present disclosure, brightness compensation is performed by adjusting the brightness of the screen for the scene being shot. Therefore, the scene illuminated by the screen should correspond to the scene captured by the selected camera, meaning the direction of the selected camera should align with the direction of the screen-based fill light.

Accordingly, in the embodiments of the present disclosure, the following example is used: the selected camera is the front camera, and the real-time preview image is obtained through the front camera. That is, the terminal device activates the front camera and displays the real-time preview image captured by the front camera on the front screen, and the screen provides a certain amount of illumination brightness for the subject in the real-time preview image.

It can be understood that by obtaining the real-time preview image, analysis of the real-time preview image facilitates adjustment of related shooting parameters, resulting in an image of better imaging quality.

S102: dividing the real-time preview image and the screen into at least two sub-regions respectively to obtain image sub-regions and screen sub-regions in one-to-one correspondence.

It can be understood that all image sub-regions together form the real-time preview image, and all screen sub-regions together form the screen interface of the terminal device. Accordingly, in the embodiments of the present disclosure, the shapes of the image sub-regions and the screen sub-regions may include rectangles, squares, rhombuses, parallelograms, or triangles (such as right triangles).

In addition, the sizes of the sub-regions may be configured flexibly. Smaller sub-region sizes correspond to smaller areas and allow more refined screen brightness adjustment, resulting in improved fill-light effects.

By dividing the real-time preview image and the screen into sub-regions respectively, targeted adjustment of screen brightness for each sub-region becomes convenient, enabling differentiated brightness compensation for the respective sub-regions.

S103: determining to-be-filled light brightness information for each image sub-region according to real-time brightness information of the image sub-region.

It can be understood that the real-time brightness information of an image sub-region may be determined according to image brightness parameters corresponding to that image sub-region. For example, the real-time brightness information may be determined based on RAW data corresponding to the image sub-region. The real-time brightness information reflects the brightness condition of the corresponding real-scene portion. For example, if the real-scene portion is dark, the captured image will also appear dark.

It can be understood that different real-time brightness levels correspond to different fill-light brightness needs. Therefore, determining the to-be-filled light brightness information according to the real-time brightness information improves accuracy. At the same time, the brightness information determined based on actual scene brightness can satisfy the brightness compensation requirements for the corresponding image sub-region.

S104: adjusting light-emitting brightness information of each screen sub-region according to the to-be-filled light brightness information of the corresponding image sub-region.

Through the one-to-one correspondence between the image sub-regions and the screen sub-regions, brightness compensation can be performed for each image sub-region by adjusting the illumination brightness of its corresponding screen sub-region. This achieves precise fill-light effects and improves the accuracy of brightness compensation.

It can be understood that adjusting the light-emitting brightness information of a screen sub-region according to the to-be-filled light brightness information helps improve the accuracy of brightness control.

It can be understood that using the screen of the terminal device to provide brightness for front-camera shooting improves the imaging quality of the front camera. By dividing the screen into multiple sub-regions and providing different illumination brightness for each sub-region, the accuracy of brightness output is enhanced, enabling differentiated brightness compensation across sub-regions and improving the overall visual effect and image quality. Each screen sub-region performs illumination compensation according to its corresponding image sub-region, and the to-be-filled light brightness information is determined based on the real-time brightness information of the corresponding image sub-region, thereby improving the accuracy of brightness compensation

Each screen sub-region performs illumination brightness compensation according to its corresponding image sub-region, and the to-be-filled light brightness information is determined based on the real-time brightness information of the corresponding image sub-region, thereby improving the accuracy of the fill-light brightness for each screen sub-region.

Since light propagation involves a certain level of attenuation, in order to ensure the accuracy of illumination brightness provision, the to-be-filled light brightness information may be determined according to the spatial distance between an image sub-region and its corresponding screen sub-region. That is, optionally, in some embodiments of the present disclosure, the step "determining the to-be-filled light brightness information for each image sub-region according to the real-time brightness information of the image sub-region" includes:
determining, for each image sub-region, a spatial distance between a real-scene portion corresponding to the image sub-region and the corresponding screen sub-region according to a depth map corresponding to the real-time preview image;
determining the to-be-filled light brightness information according to the spatial distance and the real-time brightness information.

It can be understood that the real-scene portion refers to a portion of the actual object corresponding to the real-time preview image. For example, the real-scene portion may be a part of a user's face. Correspondingly, the spatial distance is the distance between the real-scene portion and the corresponding screen sub-region, such as the distance between the nose of the face and a center point of the screen.

In the depth map, each pixel value represents the distance between a point in the scene and a camera. Therefore, the spatial distance between an image sub-region and its corresponding screen sub-region can be calculated based on the depth value indicated in the depth map. For example, the depth value of the nose represents the distance from the nose to the camera. This distance may be considered the hypotenuse of a right triangle, with the distance between the center point of the screen sub-region and the camera serving as one of the legs of the triangle, and the other leg obtained through calculation.

Determining the to-be-filled light brightness information based on the spatial distance improves the accuracy of the determined brightness, ensuring that the illumination brightness emitted by the screen can effectively act on the corresponding real-scene portion. When the real-scene portion is illuminated and its surface brightness increases, the imaging effect of this portion in the displayed image is enhanced, thereby improving the overall visual effect of the image.

Optionally, since the angle between the real-scene portion and the screen affects the illumination effect of the screen light on the real scene, after determining the to-be-filled light brightness information required by the image sub-region, relative angle information between the screen and the real-scene subject may also be introduced. The relative angle information is used to calculate the to-be-emitted light brightness information of the screen sub-region. That is, optionally, in some embodiments of the present disclosure, the step "adjusting the light-emitting brightness information of each screen sub-region according to the to-be-filled light brightness information of the corresponding image sub-region" includes:
determining relative angle information between a target object main body in the real-time preview image and the screen according to the depth map corresponding to the real-time preview image and posture information of the terminal device;
determining, for each screen sub-region, the spatial distance between the screen sub-region and the corresponding image sub-region according to the depth map;
determining the to-be-emitted light brightness information of the screen sub-region according to the to-be-filled light brightness information of the corresponding image sub-region, the spatial distance, and the relative angle information;
adjusting the light-emitting brightness information of the screen sub-region to the to-be-emitted light brightness information.

It can be understood that the target object main body refers to the main subject in the real-time preview image. For example, the subject may be an object or a person. When the real-time preview image is captured for a human face, the target object main body in the preview image is the face.

It can be understood that the orientation of the target object main body relative to the screen may vary, such as being horizontal or tilted. In order to avoid degrading the fill-light effect or even producing undesired effects, determining the relative angle information between the target object main body and the screen helps improve the accuracy of the illumination brightness of the screen sub-region.

Optionally, in the embodiments of the present disclosure, the relative angle information includes angle information of a plane where the target object main body is located with respect to the screen. The angle information may include rotation angle information, pitch angle information, and roll angle information. That is, optionally, in some embodiments of the present disclosure, the step "determining relative angle information between a target object main body in the real-time preview image and the screen according to the depth map corresponding to the real-time preview image and posture information of the terminal device" includes:
determining main-body plane information of the target object main body in the real-time preview image according to the depth map corresponding to the real-time preview image;
determining screen plane information of the screen according to the posture information of the terminal device;
determining rotation angle information, pitch angle information, and roll angle information between the target object main body and the screen according to the main-body plane information and the screen plane information;
obtaining the relative angle information according to the rotation angle information, the pitch angle information, and the roll angle information.

It should be noted that the main-body plane information refers to the distribution information of the plane where the target object main body is located, which may be represented by point position information and tilt angle information. When the target object main body has a three-dimensional structure, the plane information corresponds to the surface of the target object main body captured in the image. For example, when the target object main body is a human face, the plane corresponds to the surface of the face.

It can be understood that posture information refers to information regarding the orientation of the terminal device, including its position and tilt angle. Since the structure of the terminal device is generally fixed, once the posture information of the terminal device is known, the screen plane information of the screen can be determined accordingly, including its tilt orientation in space.

Through the two planes, rotation angle information, pitch angle information, and roll angle information can be computed. For example, the angle between a plane of a mobile phone and a plane of the human face may be computed as the rotation angle information; the angle between a longitudinal axis of the mobile phone and a longitudinal axis of the face may be computed as the pitch angle information; and the angle between a horizontal axis of the mobile phone and a horizontal axis of the face may be computed as the roll angle information.

In the embodiments of the present disclosure, the rotation angle information, the pitch angle information, and the roll angle information collectively serve as the relative angle information between the target object main body and the screen.

It can be understood that the brightness of an image sub-region reflects the brightness of the corresponding real-scene portion, and such brightness information may be obtained from data signals corresponding to the image sub-region. That is, optionally, in some embodiments of the present disclosure, before the step "determining the to-be-filled light brightness information for each image sub-region according to the real-time brightness information of the image sub-region," the method further includes:
determining the real-time brightness information of each image sub-region based on image raw data corresponding to the image sub-region, where the image raw data is obtained after an image sensor converts captured light-source information into data signals.

For example, after obtaining the preview image, the data signals converted from the light-source signals captured by the image sensor may be extracted, and the real-time brightness information of the image sub-region may be determined based on the data signals. The image raw data includes RAW data.

Optionally, in the embodiments of the present disclosure, the screen may also be a screen having a backlight. Correspondingly, the screen includes a foreground panel and a backlight panel. The backlight panel is formed by splicing multiple backlight regions and is used to provide backlight, whereas the foreground panel is used for displaying images to be displayed and achieving a corresponding display effect under the backlight provided by the backlight panel. For example, in the embodiments of the present disclosure, the screen may include an LCD, an LED, or another type of display panel.

Since the backlight panel is formed by multiple backlight regions, in order to conveniently perform regional dimming of the screen, the screen may be divided based on the backlight regions to obtain multiple screen sub-regions. That is, optionally, in some embodiments of the present disclosure, the step "dividing the real-time preview image and the screen into at least two sub-regions respectively to obtain image sub-regions and screen sub-regions in one-to-one correspondence" includes:
dividing the screen into at least two screen sub-regions according to a distribution condition of the backlight regions corresponding to the screen;
dividing the real-time preview image according to a distribution condition of the screen sub-regions to obtain image sub-regions corresponding one-to-one to the screen sub-regions.

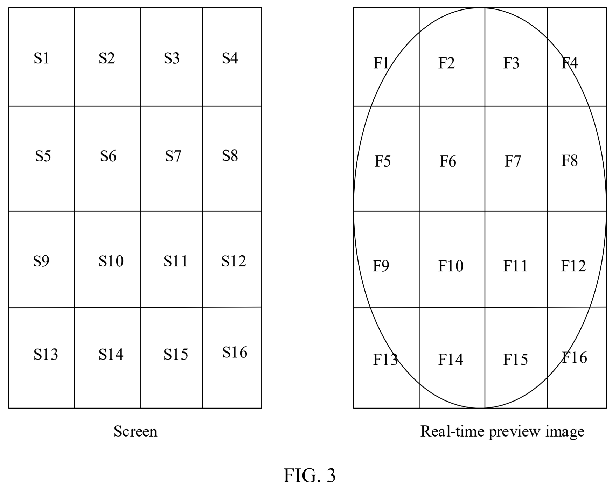

For example, the number of backlight regions corresponds to the number of screen sub-regions into which the screen is divided. Based on the one-to-one correspondence between the screen sub-regions and the image sub-regions, the real-time preview image may be divided correspondingly. Please refer to FIG. 3, which illustrates a schematic result of dividing the screen and the real-time preview image in the embodiments of the present disclosure. As shown, the screen and the real-time preview image are separately divided to obtain screen sub-regions and image sub-regions in one-to-one correspondence. Subsequently, the brightness requirement of each screen sub-region may be determined according to the to-be-filled light brightness requirement of the corresponding image sub-region.

Correspondingly, in the embodiments of the present disclosure, the subject captured by the front camera may be a human face. To improve the effect of face shooting, the portion of the real-time preview image corresponding to the face may be divided, and the brightness of the screen may be adjusted based on the three-dimensional structure of the face so as to improve the accuracy of brightness adjustment and thereby enhance the quality of face shooting. That is, optionally, in some embodiments of the present disclosure, when the real-time preview image includes a face image that constitutes a part of the real-time preview image, the step "dividing the real-time preview image and the screen into at least two sub-regions respectively to obtain image sub-regions and screen sub-regions in one-to-one correspondence" includes:
dividing the face image and the screen to obtain at least two image sub-regions and at least two screen sub-regions;
determining relative angle information between a face surface corresponding to the face image and the screen according to the depth map of the real-time preview image and posture information of the terminal device;
determining relative position information between the face surface corresponding to the face image and the screen according to the depth map and the relative angle information;
establishing a one-to-one correspondence between the image sub-regions and the screen sub-regions according to the relative angle information and the relative position information.

It can be understood that dividing the face portion of the real-time preview image enables more targeted brightness adjustment and helps improve the adjustment effect.

It can also be understood that, by means of the depth map and posture information of the terminal device, the relative angle information between the face surface and the screen may be obtained. Since the angular relationship between the face and the screen may vary, for example, horizontal, tilted, or parallel to the screen, the brightness requirements of different portions of the face will differ. Therefore, in the embodiments of the present disclosure, determining the screen sub-region corresponding to each image sub-region based on the relative angle information between the face surface and the screen helps provide brightness more effectively and accurately according to the illumination needs of different facial regions, thereby improving the effectiveness and accuracy of facial illumination.

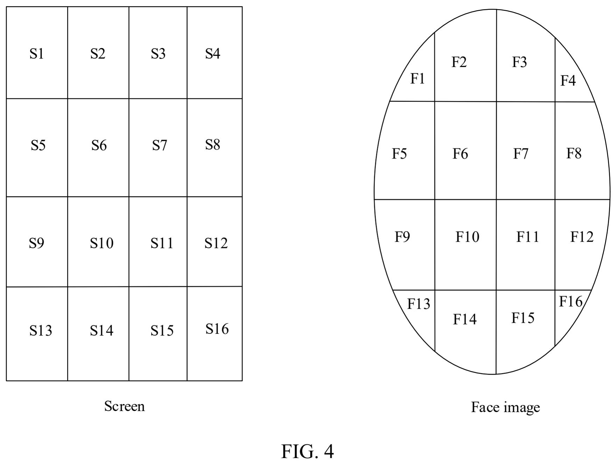

Please refer to FIG. 4. FIG. 4 is a schematic diagram illustrating a result of dividing the screen and a face image according to another embodiment of the present disclosure, where the face image is obtained from the face portion of the real-time preview image. By dividing the face portion of the image and determining, based on relative angle information, the screen sub-region corresponding to each image sub-region, the screen can be divided according to the respective illumination requirements of different facial regions. This enables the screen sub-regions to provide differentiated illumination for different facial parts, thereby achieving compensation tailored to the illumination needs of various facial features.

It can be understood that the embodiments of the present disclosure. divide the screen into multiple sub-regions and allow each sub-region to provide illumination brightness independently. This enables differentiated brightness compensation for different portions of the shooting subject, which helps improve the imaging effect and overall image quality.

By determining the to-be-filled light brightness information for each image sub-region according to the spatial distance between the image sub-region and the corresponding screen sub-region, the accuracy of the to-be-filled light brightness information is improved.

Furthermore, by determining the screen sub-region corresponding to each image sub-region based on the relative angle information, the accuracy of establishing the correspondence relationship is enhanced. As a result, differentiated brightness compensation can be achieved while ensuring that the compensation effect remains effective.

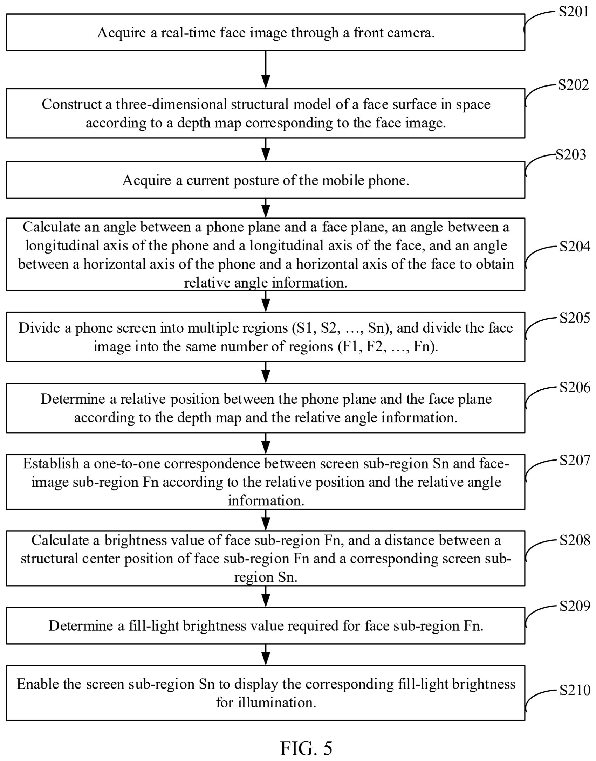

Please refer to FIG. 5. FIG. 5 is a flowchart of a brightness compensation method when a front camera shoots a face, according to another embodiment of the present disclosure. The method includes operations S201-S210.

S201: acquiring a real-time face image through a front camera.

The real-time face image refers to the real-time frame captured by the front camera.

S202: constructing a three-dimensional structural model of a face surface in space according to a depth map corresponding to the face image.

The three-dimensional face model may be obtained using a stereo camera, a structured-light sensor, or a TOF (Time-of-Flight) sensor.

S203: acquiring a current posture of a mobile phone.

The current posture of the phone may be obtained using an accelerometer sensor and a gyroscope sensor in the phone.

S204: calculating an angle between a plane of the phone and a plane of the face, an angle between a longitudinal axis of the phone and a longitudinal axis of the face, and an angle between a horizontal axis of the phone and a horizontal axis of the face according to the posture of the phone and the three-dimensional face model, to obtain relative angle information.

S205: dividing a mobile phone screen into multiple regions (S1, S2, ..., Sn), and dividing the face image into the same number of regions (F1, F2, ..., Fn).

The number of regions is not limited and depends on the expected precision of brightness control and the real-time computation capability. More regions result in finer segmentation of the face and more precise brightness control, at the cost of higher computational overhead.

S206: obtaining a relative position between the phone plane and the face plane according to the depth map and the relative angle information.

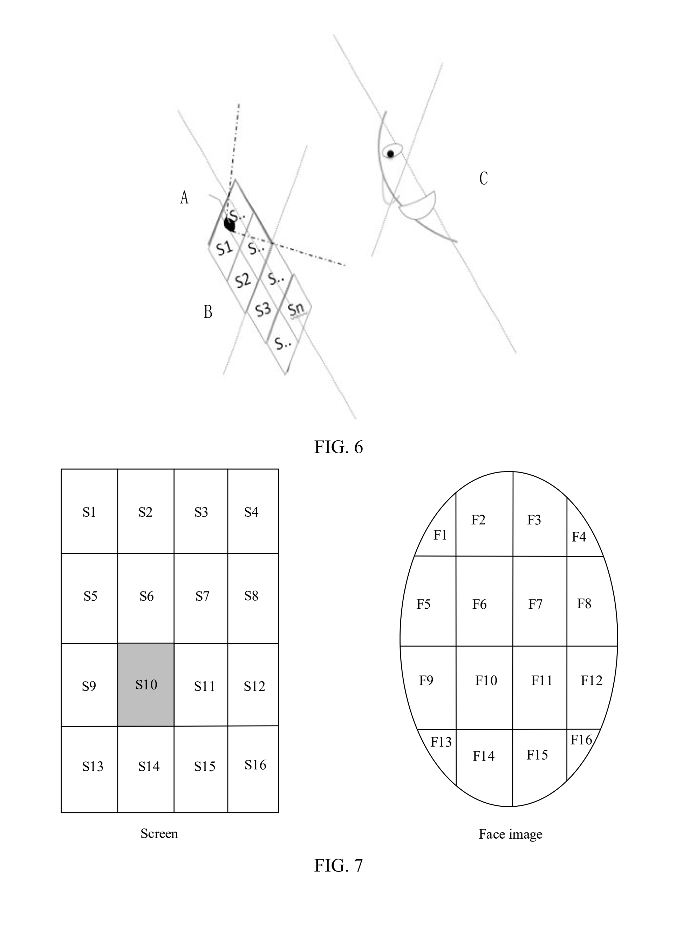

Please refer to FIG. 6. FIG. 6 illustrates a relative position between a screen and a face surface. It shows a front camera A, a screen B, a face C, screen sub-regions S1, S2, ..., Sn, as well as various angles such as rotation angle, pitch angle, and roll angle.

S207: establishing a one-to-one correspondence between a screen sub-region Sn and a face image sub-region Fn according to the relative position and the relative angle information.

As illustrated in FIG. 4, S1 corresponds to F1, S2 corresponds to F2, ..., and Sn corresponds to Fn.

S208: calculating a brightness value of the face sub-region Fn and a distance between a structural center position of the face sub-region Fn and a corresponding screen sub-region Sn.

The brightness value of Fn is calculated from RAW data at the corresponding position.

The structural center position of Fn refers to the center point of the three-dimensional structural surface of the current face sub-region.

S209: determining a brightness value required for compensating the face sub-region Fn according to the calculation result of step S208, that is, a fill-light brightness.

The fill-light brightness is within a brightness range of the screen. Based on step S208, the brightness is positively correlated with distance: the farther the distance, the greater the brightness; the closer the distance, the lower the brightness.

S210: enabling the screen sub-region Sn to display the corresponding fill-light brightness according to the calculation result of step S209.

In the embodiments of the present disclosure, adjusting the display brightness of the screen sub-region Sn according to the fill-light brightness specifically includes:
constructing a spatial relationship between the face sub-region Fn and the mobile phone screen sub-region Sn as [Fn, Sn] = P(α, β, γ, Ln),
where α is a rotation angle, β is a roll angle, γ is a pitch angle, and Ln is a spatial distance between the face sub-region and the screen sub-region;
obtaining a correspondence between a screen sub-region brightness An and a required exposure compensation En of the face sub-region as An = Q(En, Ln, [Fn, Sn]);
determining the brightness An of the screen sub-region according to the fill-light brightness En.

After the above steps, the screen displays the pattern shown in FIG. 7. The darker the gray block, the lower the brightness of the screen sub-region. The screen sub-regions S1-S9 correspond one-to-one to the face sub-regions F1-F9.

To more effectively implement the photographing light-filling method of the present disclosure, an apparatus based on the above photographing light-filling method is also provided. The meanings of the terms are the same as those in the photographing light-filling method, and specific implementation details can be found in the method embodiments.

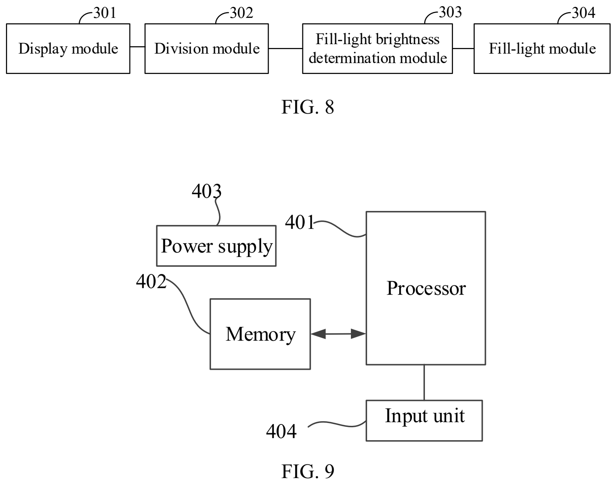

Please refer to FIG. 8. FIG. 8 is a block diagram of a photographing light-filling apparatus according to another embodiment of the present disclosure. The photographing light-filling apparatus is applied to a terminal device and may include a display module 301, a division module 302, a fill-light brightness determination module 303, and a fill-light module 304.

The display module 301 is configured to display a real-time preview image on a screen of the terminal device, where the real-time preview image is obtained by shooting through a front camera of the terminal device.

The division module 302 is configured to divide the real-time preview image and the screen into at least two sub-regions respectively to obtain image sub-regions and screen sub-regions in one-to-one correspondence.

The fill-light brightness determination module 303 is configured to determine to-be-filled light brightness information for each image sub-region according to real-time brightness information of the image sub-region.

The fill-light module 304 is configured to adjust light-emitting brightness information of each screen sub-region according to the to-be-filled light brightness information of the corresponding image sub-region.

In some embodiments of the present disclosure, the fill-light brightness determination module 303 includes a first distance determination unit and a fill-light brightness determination unit.

The first distance determination unit is configured to determine a spatial distance between a real-scene portion corresponding to each image sub-region and a corresponding screen sub-region according to a depth map corresponding to the real-time preview image.

The fill-light brightness determination unit is configured to determine the to-be-filled light brightness information according to the spatial distance and the real-time brightness information.

In some embodiments of the present disclosure, the fill-light module 304 includes a first angle determination unit, a second distance determination unit, a fill-light brightness determination unit, and a fill-light unit.

The first angle determination unit is configured to determine relative angle information between a target object main body in the real-time preview image and the screen according to the depth map corresponding to the real-time preview image and posture information of the terminal device.

The second distance determination unit is configured to determine a spatial distance between each screen sub-region and the corresponding image sub-region according to the depth map.

The fill-light brightness determination unit is configured to determine to-be-emitted light brightness information of each screen sub-region according to the to-be-filled light brightness information of the corresponding image sub-region, the spatial distance, and the relative angle information.

The fill-light unit is configured to adjust the light-emitting brightness information of the screen sub-region to the to-be-emitted light brightness information.

In some embodiments of the present disclosure, the first angle determination unit includes a main-body plane determination sub-unit, a screen plane determination sub-unit, a screen plane determination sub-unit, a first angle determination sub-unit, and a second angle determination sub-unit.

The main-body plane determination sub-unit is configured to determine main-body plane information of the target object main body in the real-time preview image according to the depth map;

The screen plane determination sub-unit is configured to determine screen plane information of the screen according to posture information of the terminal device;

The first angle determination sub-unit is configured to determine rotation angle information, pitch angle information, and roll angle information between the target object main body and the screen according to the main-body plane information and the screen plane information;

The second angle determination sub-unit is configured to obtain the relative angle information according to the rotation angle information, the pitch angle information, and the roll angle information.

In some embodiments of the present disclosure, the apparatus further includes a real-time brightness determination module. The real-time brightness determination module includes a real-time brightness determination unit.

The real-time brightness determination unit is configured to determine real-time brightness information of each image sub-region according to image raw data corresponding to the image sub-region, where the image raw data is obtained after an image sensor converts captured light-source information into data signals.

In some embodiments of the present disclosure, the division module 302 includes a first division unit and a second division unit.

The first division unit is configured to divide the screen into at least two screen sub-regions according to a distribution condition of backlight regions corresponding to the screen.

The second division unit is configured to divide the real-time preview image according to a distribution condition of the screen sub-regions to obtain image sub-regions corresponding one-to-one to the screen sub-regions.

In some embodiments of the present disclosure, when the real-time preview image includes a face image, where the face image is a part of the real-time preview image, the division module 302 includes a third division unit, a second angle determination unit, a position determination unit, and a correspondence relationship determination unit.

The third division unit is configured to divide the face image and the screen to obtain at least two image sub-regions and at least two screen sub-regions.

The second angle determination unit is configured to determine relative angle information between a face surface corresponding to the face image and the screen according to the depth map of the real-time preview image and posture information of the terminal device.

The position determination unit is configured to determine relative position information between the face surface corresponding to the face image and the screen according to the depth map and the relative angle information.

The correspondence relationship determination unit is configured to establish a one-to-one correspondence between the image sub-regions and the screen sub-regions according to the relative angle information and the relative position information.

In the embodiments of the present disclosure, the display module 301 first displays a real-time preview image on a screen of the terminal device, where the real-time preview image is obtained by shooting through a front camera of the terminal device. Next, the division module 302 divides the real-time preview image and the screen into at least two sub-regions respectively to obtain image sub-regions and screen sub-regions in one-to-one correspondence. Subsequently, the fill-light brightness determination module 303 determines the to-be-filled light brightness information for each image sub-region according to real-time brightness information of the corresponding image sub-region. Then, the fill-light module 304 adjusts the light-emitting brightness information of each screen sub-region according to the to-be-filled light brightness information of the corresponding image sub-region.

It can be understood that using the screen of the terminal device to provide brightness for front-camera shooting improves the imaging quality of front-camera photography. By dividing the screen into multiple sub-regions and providing different illumination brightness for each sub-region, the accuracy of brightness provision is improved, enabling differentiated brightness compensation for the respective sub-regions and enhancing the overall visual effect and imaging quality. Each screen sub-region performs brightness compensation according to its corresponding image sub-region, and the to-be-filled light brightness information is determined based on the real-time brightness information of the corresponding image sub-region, thereby improving the accuracy of brightness compensation for each screen sub-region.

Please refer to FIG. 9 illustrating a block diagram of an electronic device according to another embodiment of the present disclosure. Specifically, the electronic device may include a processor 401 having one or more processing cores, a memory 402 comprising one or more computer-readable storage media, a power supply 403, and an input unit 404. It should be understood by those skilled in the art that the structure of the electronic device shown in FIG. 9 does not limit the electronic device and may include more or fewer components than those illustrated, or combine certain components, or adopt different component arrangements.

The processor 401 serves as a control center of the electronic device. It connects to all components of the electronic device through various interfaces and buses, and executes software programs and/or modules stored in the memory 402. By invoking data stored in the memory 402, the processor 401 performs various functional operations and data processing, thereby achieving overall control of the electronic device. Optionally, the processor 401 may include one or more processing cores. Preferably, the processor 401 may integrate an application processor and a modem processor, where the application processor mainly handles an operating system, a user interface, and applications, while the modem processor mainly handles wireless communication. It should be understood that the modem processor may also be implemented externally and not integrated into the processor 401.

The memory 402 may be used to store software programs and modules. By executing the software programs and modules stored in the memory 402, the processor 401 performs various functional applications and data processing. The memory 402 may include a program storage area and a data storage area. The program storage area may store an operating system and application programs (e.g., audio playback, image display, etc.). The data storage area may store data generated during the use of the electronic device. Furthermore, the memory 402 may include high-speed random-access memory and also non-volatile storage memory, such as one or more magnetic disk devices, flash memory devices, or other solid-state storage devices. Correspondingly, the memory 402 may further include a memory controller for enabling the processor 401 to access the memory 402.

The electronic device further includes a power supply 403 that supplies power to the various components. Preferably, the power supply 403 may be logically connected to the processor 401 through a power management system, thereby enabling charging management, discharging management, and power consumption management. The power supply 403 may also include one or more DC or AC power sources, recharging systems, power failure detection circuits, power converters or inverters, power state indicators, and other components.

The electronic device may further include an input unit 404, which is configured to receive digital or character input and generate signals related to user settings and functional control through a keyboard, mouse, joystick, optical input, or trackball.

Although not illustrated, the electronic device may also include a display unit, which is not further described here. In the present embodiment, the processor 401 may execute instructions to load executable files corresponding to one or more application processes into the memory 402 and run the applications stored in the memory 402, so as to implement steps of any of the photographing light-filling methods according to another embodiment of the present disclosure.

The embodiments of the present disclosure. are applied to a terminal device. The terminal device displays a real-time preview image on a screen, where the real-time preview image is obtained by shooting through a front camera of the terminal device. The real-time preview image and the screen are divided into at least two sub-regions respectively to obtain image sub-regions and screen sub-regions in one-to-one correspondence. For each image sub-region, the to-be-filled light brightness information is determined according to real-time brightness information of the image sub-region. For each screen sub-region, the light-emitting brightness information is adjusted according to the to-be-filled light brightness information of the corresponding image sub-region.

Using the screen of the terminal device to provide illumination for front-camera shooting improves the imaging quality of front-camera photographs. By dividing the screen into multiple sub-regions and providing different illumination brightness for each sub-region, the accuracy of brightness control is improved, enabling differentiated brightness compensation for various regions and enhancing the overall visual quality of the image. Each screen sub-region performs brightness compensation based on the corresponding image sub-region, and the to-be-filled light brightness information is determined according to the real-time brightness information of the image sub-region, thereby improving the accuracy of brightness compensation for each screen sub-region.

The detailed implementations of the above operations may be found in the preceding embodiments and are not repeated here.

Those skilled in the art will understand that all or part of the steps of the various methods described in the embodiments above may be implemented by instructions, or by controlling corresponding hardware through such instructions. The instructions may be stored in a computer-readable storage medium and loaded and executed by a processor.

To this end, the present disclosure. further provides a computer-readable storage medium. A computer program is stored on the computer-readable storage medium, and the computer program may be loaded by a processor to execute the steps of any of the photographing light-filling methods provided by the present disclosure.

The specific implementations of the above operations may be found in the preceding embodiments and are not repeated here.

The computer-readable storage medium may include a read-only memory (ROM), a random-access memory (RAM), a magnetic disk, an optical disk, or the like.

Since the instructions stored in the computer-readable storage medium can execute the steps of any of the photographing light-filling methods provided by the present disclosure, the beneficial effects achievable by any such method can also be realized. These effects have been described in detail in the preceding embodiments and are not repeated here.

The photographing light-filling method, apparatus, electronic device, and computer-readable storage medium provided by the present disclosure. have been described in detail above. Specific examples have been used to explain the principles and implementations of the present invention. The descriptions of the embodiments are merely intended to help understand the method and the core concept of the present invention. For those skilled in the art, based on the concept of the present invention, various modifications may be made to the specific implementation manners and application scopes. Therefore, the content of this specification should not be construed as limiting the present invention.

It should also be noted that, in the specific embodiments of the present disclosure, data related to image content information (such as identifying a subject in the image, e.g., a face), image pixel parameters (RAW data), image brightness data, screen brightness data, posture information of the terminal device, and other related information may be involved. When the embodiments of the present disclosure. are applied to specific products or technologies, obtaining user permission or consent is required. Moreover, the collection, use, and processing of the relevant data must comply with the applicable laws, regulations, and standards of the relevant countries or regions.

## Claims

1. A photographing light-filling method, applied to a terminal device, the method comprising:
displaying a real-time preview image on a screen of the terminal device, the real-time preview image being obtained by shooting through a front camera of the terminal device;
dividing the real-time preview image and the screen respectively into at least two sub-regions to obtain image sub-regions and screen sub-regions in one-to-one correspondence;
for each image sub-region, determining to-be-filled light brightness information according to real-time brightness information of the image sub-region; and
for each screen sub-region, adjusting light-emitting brightness information of the screen sub-region according to the to-be-filled light brightness information of the corresponding image sub-region.

2. The photographing light-filling method according to claim 1, wherein determining the to-be-filled light brightness information for each image sub-region according to the real-time brightness information of the image sub-region comprises:
for each image sub-region, determining a spatial distance between a real-scene portion corresponding to the image sub-region and the corresponding screen sub-region according to a depth map corresponding to the real-time preview image;
determining the to-be-filled light brightness information according to the spatial distance and the real-time brightness information.

3. The photographing light-filling method according to claim 1, wherein adjusting the light-emitting brightness information of each screen sub-region according to the to-be-filled light brightness information of the corresponding image sub-region comprises:
determining relative angle information between a target object main body in the real-time preview image and the screen according to the depth map corresponding to the real-time preview image and posture information of the terminal device;
for each screen sub-region, determining the spatial distance between the screen sub-region and the corresponding image sub-region according to the depth map;
determining to-be-emitted light brightness information of the screen sub-region according to the to-be-filled light brightness information of the corresponding image sub-region, the spatial distance, and the relative angle information;
adjusting the light-emitting brightness information of the screen sub-region to the to-be-emitted light brightness information.

4. The photographing light-filling method according to claim 3, wherein determining the relative angle information between the target object main body in the real-time preview image and the screen according to the depth map corresponding to the real-time preview image and the posture information of the terminal device comprises:
determining main-body plane information of the target object main body in the real-time preview image according to the depth map corresponding to the real-time preview image;
determining screen plane information of the screen according to the posture information of the terminal device;
determining rotation angle information, pitch angle information, and roll angle information between the target object main body and the screen according to the main-body plane information and the screen plane information;
obtaining the relative angle information according to the rotation angle information, the pitch angle information, and the roll angle information.

5. The photographing light-filling method according to claim 1, wherein before determining the to-be-filled light brightness information for each image sub-region according to the real-time brightness information of the image sub-region, the method further comprises:
for each image sub-region, determining the real-time brightness information of the image sub-region according to image raw data corresponding to the image sub-region, the image raw data being obtained after an image sensor converts captured light-source information into data signals.

6. The photographing light-filling method according to any one of claims 1-5, wherein dividing the real-time preview image and the screen respectively into at least two sub-regions to obtain the image sub-regions and the screen sub-regions in one-to-one correspondence comprises:
dividing the screen into at least two screen sub-regions according to a distribution condition of backlight regions corresponding to the screen; and
dividing the real-time preview image according to a distribution condition of the screen sub-regions to obtain the image sub-regions corresponding one-to-one to the screen sub-regions.

7. The photographing light-filling method according to any one of claims 1-5, wherein the real-time preview image comprises a face image, the face image being a portion of the real-time preview image, and dividing the real-time preview image and the screen respectively into at least two sub-regions to obtain the image sub-regions and the screen sub-regions comprises:
dividing the face image and the screen to obtain at least two image sub-regions and at least two screen sub-regions;
determining the relative angle information between a face surface corresponding to the face image and the screen according to the depth map of the real-time preview image and the posture information of the terminal device;
determining relative position information between the face surface corresponding to the face image and the screen according to the depth map and the relative angle information;
establishing the one-to-one correspondence between the image sub-regions and the screen sub-regions according to the relative angle information and the relative position information.

8. The photographing light-filling method according to claim 1, wherein the method further comprises:
when the terminal device comprises a front screen and a back screen, and the screen displaying the real-time preview image is the back screen of the terminal device, the real-time preview image is obtained by shooting through a rear camera of the terminal device.

9. The photographing light-filling method according to claim 1, wherein shapes of the image sub-regions and corresponding screen sub-regions comprise at least one of a rectangle, a square, a rhombus, a parallelogram, or a triangle.

10. A photographing light-filling apparatus, applied to a terminal device, the apparatus comprising:
a display module, configured to display a real-time preview image on a screen of the terminal device, the real-time preview image being obtained by shooting through a front camera of the terminal device;
a division module, configured to divide the real-time preview image and the screen respectively into at least two sub-regions to obtain image sub-regions and screen sub-regions in one-to-one correspondence;
a fill-light brightness determination module, configured to determine to-be-filled light brightness information for each image sub-region according to real-time brightness information of the image sub-region; and
a fill-light module, configured to adjust light-emitting brightness information of each screen sub-region according to the to-be-filled light brightness information of the corresponding image sub-region.

11. The photographing light-filling apparatus according to claim 10, wherein the fill-light brightness determination module comprises:
a first distance determination unit, configured to determine a spatial distance between a real-scene portion corresponding to each image sub-region and the corresponding screen sub-region according to a depth map corresponding to the real-time preview image; and
a fill-light brightness determination unit, configured to determine the to-be-filled light brightness information according to the spatial distance and the real-time brightness information.

12. The photographing light-filling apparatus according to claim 10, wherein the fill-light module comprises:
a first angle determination unit, configured to determine relative angle information between a target object main body in the real-time preview image and the screen according to the depth map corresponding to the real-time preview image and posture information of the terminal device;
a second distance determination unit, configured to determine the spatial distance between each screen sub-region and the corresponding image sub-region according to the depth map;
a fill-light brightness determination unit, configured to determine to-be-emitted light brightness information of each screen sub-region according to the to-be-filled light brightness information of the corresponding image sub-region, the spatial distance, and the relative angle information; and
a fill-light unit, configured to adjust the light-emitting brightness information of the screen sub-region to the to-be-emitted light brightness information.

13. The photographing light-filling apparatus according to claim 12, wherein the first angle determination unit comprises:
a main-body plane determination sub-unit, configured to determine main-body plane information of the target object main body in the real-time preview image according to the depth map corresponding to the real-time preview image;
a screen plane determination sub-unit, configured to determine screen plane information of the screen according to the posture information of the terminal device;
a first angle determination sub-unit, configured to determine rotation angle information, pitch angle information, and roll angle information between the target object main body and the screen according to the main-body plane information and the screen plane information; and
a second angle determination sub-unit, configured to obtain the relative angle information according to the rotation angle information, the pitch angle information, and the roll angle information.

14. The photographing light-filling apparatus according to claim 10, further comprising a real-time brightness determination module, wherein the real-time brightness determination module comprises:
a real-time brightness determination unit, configured to determine the real-time brightness information of each image sub-region according to image raw data corresponding to the image sub-region, the image raw data being obtained after an image sensor converts captured light-source information into data signals.

15. The photographing light-filling apparatus according to any one of claims 10-14, wherein the division module comprises:
a first division unit, configured to divide the screen into at least two screen sub-regions according to a distribution condition of backlight regions corresponding to the screen;
a second division unit, configured to divide the real-time preview image according to a distribution condition of the screen sub-regions to obtain the image sub-regions corresponding one-to-one to the screen sub-regions.

16. The photographing light-filling apparatus according to any one of claims 10-14, wherein the real-time preview image comprises a face image, the face image being a portion of the real-time preview image, and the division module comprises:
a third division unit, configured to divide the face image and the screen to obtain at least two image sub-regions and at least two screen sub-regions;
a second angle determination unit, configured to determine the relative angle information between a face surface corresponding to the face image and the screen according to the depth map of the real-time preview image and the posture information of the terminal device;
a position determination unit, configured to determine relative position information between the face surface corresponding to the face image and the screen according to the depth map and the relative angle information; and
a correspondence relationship determination unit, configured to establish a one-to-one correspondence between the image sub-regions and the screen sub-regions according to the relative angle information and the relative position information.

17. The photographing light-filling apparatus according to claim 10, wherein the display module comprises:
when the terminal device comprises a front screen and a back screen, and the screen displaying the real-time preview image is the back screen of the terminal device, the real-time preview image is obtained by shooting through a rear camera of the terminal device.

18. The photographing light-filling apparatus according to claim 10, wherein shapes of the image sub-regions and corresponding screen sub-regions comprise at least one of a rectangle, a square, a rhombus, a parallelogram, or a triangle.

19. An electronic device, comprising a memory, a processor, and instructions stored in the memory and executable by the processor to implement operations comprising:
displaying a real-time preview image on a screen of the terminal device, the real-time preview image being obtained by shooting through a front camera of the terminal device;
dividing the real-time preview image and the screen respectively into at least two sub-regions to obtain image sub-regions and screen sub-regions in one-to-one correspondence;
for each image sub-region, determining to-be-filled light brightness information according to real-time brightness information of the image sub-region; and
for each screen sub-region, adjusting light-emitting brightness information of the screen sub-region according to the to-be-filled light brightness information of the corresponding image sub-region.

20. A computer-readable storage medium storing computer program executable by a processor to implement operations comprising:displaying a real-time preview image on a screen of the terminal device, the real-time preview image being obtained by shooting through a front camera of the terminal device;
dividing the real-time preview image and the screen respectively into at least two sub-regions to obtain image sub-regions and screen sub-regions in one-to-one correspondence;
for each image sub-region, determining to-be-filled light brightness information according to real-time brightness information of the image sub-region; and
for each screen sub-region, adjusting light-emitting brightness information of the screen sub-region according to the to-be-filled light brightness information of the corresponding image sub-region.
